## Europäisches Patentamt

## European Patent Office

## Office européen des brevets

(11) Veröffentlichungsnummer: **0 005 218**
**A2**

# EUROPÄISCHE PATENTANMELDUNG

(21) Anmeldenummer: 79101194.3

(51) Int. Cl.²: **A 47 L 9/28**

(22) Anmeldetag: 19.04.79

(30) Priorität: 02.05.78 DE 2819193

(43) Veröffentlichungstag der Anmeldung: 14.11.79
Patentblatt 79/23

(84) Benannte Vertragsstaaten: DE FR NL SE

(71) Anmelder: SIEMENS AKTIENGESELLSCHAFT Berlin
und München, Postfach 261, D-8000 München 22 (DE)

(72) Erfinder: Voigt, Frieder, Dr. Dipl.-Ing., Berliner
Strasse 22, D-8740 Bad Neustadt/Saale (DE)
Erfinder: Fleischer, Wolfgang, Am Heerweg 139,
D-8731 Langendorf (DE)

(54) Staubsauger mit einer Drehzahlregeleinrichtung für das Gebläseaggregat.

(57) Die Erfindung betrifft einen Staubsauger mit einer Drehzahlregeleinrichtung für das Gebläseaggregat. Bei diesem Staubsauger ist im Regelkreis der Regeleinrichtung ein Stellglied (15) vorgesehen, das in Abhängigkeit von dem im Saugkreis herrschenden Unterdruck verstellbar ist. Um eine direkte Verstellung des Stellgliedes in Abhängigkeit von dem im Saugkreis herrschenden Unterdruck zu erreichen wird vorgeschlagen, eine mit dem Saugkreis verbundene Nebenluftöffnung (21) vorzusehen und in dem über diese Öffnung (21) in den Saugkreis eintretenden Nebenluftstrom einen das Stellglied bildenden Heissleiter (22) anzuordnen.

Eine direkte Verstellung des Stellgliedes ist auch dadurch möglich, dass im Bereich des zur Kraftübertragung zwischen dem Handgriff (6) und der Düse (8) dienenden Saugrohres (7) des Saugkreises als Stellglied ein eine mechanische Kraft in eine proportionale elektrische Grösse umwandelndes Element angeordnet und mit der Regeleinrichtung (11) verbunden ist.

0005218

SIEMENS AKTIENGESELLSCHAFT          Unser Zeichen
Berlin und München                  VPA 78 P 3080 EPC


Staubsauger mit einer Drehzahlregeleinrichtung für
das Gebläseaggregat

Die Erfindung bezieht sich auf einen Staubsauger mit
einer Drehzahlregeleinrichtung für das Gebläseaggregat,
bei dem im Regelkreis der Regeleinrichtung ein Stellglied vorgesehen ist, das in Abhängigkeit von dem im
Saugkreis herrschenden Unterdruck verstellbar ist.

Ein solcher Staubsauger ist durch die DE-OS 19 54 700
bekannt. Bei diesem Staubsauger ist an den Saugkreis
ein Druckgeber angeschlossen, mit dem als Stellglied
des Regelkreises entweder ein Fotoelement, ein Potentiometer oder ein mehrstufiger Schalter gekoppelt ist. Durch
diese Elemente wird die vom Druckgeber ermittelte mechanische Größe in eine entsprechende elektrische Größe
umgewandelt. Die Verwendung eines solchen Druckgebers
und dessen Koppelung mit den erwähnten Elementen bedeutet einen erheblichen Material- und Montageaufwand.

Ml 2 Syr / 10.1.1979

Dies gilt auch für den aus der DE-PS 573 224 bekannten
Staubsauger, bei dem ebenfalls ein mit einer Druckmeßeinrichtung gekoppelter Steuerschalter betätigt wird.

Der Erfindung liegt die Aufgabe zugrunde, einen Staubsauger so auszubilden, daß das Stellglied unmittelbar in
Abhängigkeit von dem im Saugkreis herrschenden Unterdruck verstellbar ist.

Die Lösung der gestellten Aufgabe gelingt nach der Erfindung dadurch, daß eine mit dem Saugkreis verbundene
Nebenluftöffnung vorgesehen und in dem über diese Öffnung
in den Saugkreis eintretenden Nebenluftstrom ein das
Stellglied bildender Heißleiter angeordnet ist.

Der Nebenluftstrom ist dem Unterdruck im Saugstromkreis
des Staubsaugers direkt proportional. Der Heißleiter wird
in Abhängigkeit von der Größe des Nebenluftstromes entsprechend gekühlt und dadurch sein Widerstand verändert.
Diese Widerstandsänderung führt zu einer entsprechenden
Änderung im Drehzahlregelkreis. Die Drehzahl des Gebläseaggregates kann somit derart eingestellt werden, daß im
Saugstromkreis ein etwa konstanter Unterdruck herrscht,
der zu einer konstanten Schiebe- bzw. Anpreßkraft der
Düse führt.

Um die Regelung der Saugleistung von der Aufheizzeit des
Heißleiters und auch von der jeweils herrschenden Umgebungstemperatur unabhängig zu machen, wird vorgeschlagen, daß der den Heißleiter umgebende Raum durch einen
Heizkörper erwärmbar ist.

Eine Einstellung einer Mindestsaugleistung ist dadurch
möglich, daß der durch die Nebenluftöffnung eintretende
Nebenluftstrom durch ein in Abhängigkeit von dem im
Saugkreis herrschenden Unterdruck betätigbares Verschlußelement steuerbar ist. Dadurch, daß vor der Nebenluft-

- 3 -        VPA 78 P 3080 EPC

öffnung ein mit einer Membran oder einem Kolben, welche dem Unterdruck ausgesetzt sind, gekoppelter Schieber angeordnet ist, der die Nebenluftöffnung erst nach einem bestimmten Verschiebeweg freigibt, ist eine Mindestsaugleistung fest vorgegeben.

Eine Vorwahl einer bestimmten Schiebe- bzw. Anpreßkraft ist dadurch möglich, daß die Größe des Einlasses der Nebenluftöffnung mittels eines Schiebers veränderbar ist.

Da die Schiebe- bzw. Anpreßkraft der Düse von dem an der Düse herrschenden Unterdruck abhängt, kann auch diese Kraft zur Beeinflussung des Stellgliedes dienen. Eine weitere Lösung der der Erfindung zugrunde liegenden Aufgabe besteht daher darin, daß im Bereich des zur Kraftübertragung zwischen Handgriff und Düse dienenden Saugrohres des Saugkreises als Stellglied ein eine mechanische Kraft in eine proportionale elektrische Größe umwandelndes Element angeordnet und mit der Regeleinrichtung verbunden ist. Eine Umwandlung der durch den Unterdruck bestimmten mechanischen Kraft in eine proportionale elektrische Größe gelingt dadurch, daß das Saugrohr aus mindestens zwei gegen einen Kraftspeicher ineinander schiebbaren Teilrohren besteht und mit diesen Teilrohren ein das Stellglied bildendes Schiebepotentiometer gekoppelt ist. Oder auch dadurch, daß an dem Saugrohr ein durch den auf das Saugrohr ausgeübten Druck beeinflußter, das Stellglied bildender Dehnmeßstreifen oder Piezoquarz angeordnet ist.

Anhand eines in der Zeichnung dargestellten Ausführungsbeispieles wird der Anmeldungsgegenstand nachfolgend näher beschrieben.

Es zeigt:

Fig. 1 einen Staubsauger mit einer Drehzahlregeleinrichtung für das Gebläseaggregat,

Fig. 2 das elektrische Schaltbild einer Drehzahlregeleinrichtung,

Fig. 3 die Anordnung eines Heißleiters in einem in den
Saugkreis eintretenden Nebenluftstrom und

Fig. 4 ein mit einem durch den Unterdruck im Saugkreis
beeinflußten Saugkolben gekoppeltes Schiebepotentiometer.

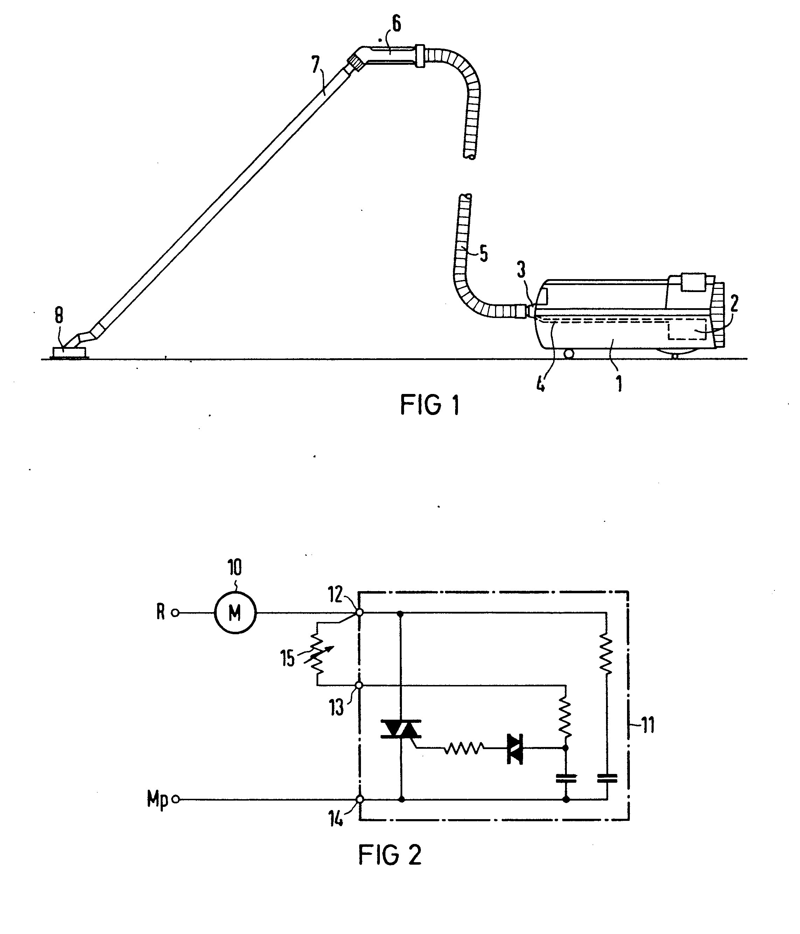

In Fig. 1 ist mit 1 ein Staubsauger bezeichnet, in
dessen Gehäuse ein Gebläseaggregat eingebaut ist, das
durch eine gestrichelt angedeutete Drehzahlregeleinrichtung 2 in seiner Drehzahl geregelt wird. Am Ansaugstutzen 3 des Staubsaugers 1 ist ein Druckschlauch 4
angeschlossen, der wie gestrichelt angedeutet, zu der
Drehzahlregeleinrichtung 2 führt und dort den Unterdruck
an einem entsprechenden Stellglied wirksam werden läßt.
An dem Anschlußstutzen 3 ist ferner ein Saugschlauch 5
angeschlossen, der über einen Handgriff 6 zu einem Saugrohr 7 führt, auf das eine Düse 8 aufgesteckt ist.

Mit 10 ist in Fig. 2 der Motor des Gebläseaggregates
des Staubsaugers 1 bezeichnet. Mit seinem einen Anschluß
ist der Motor 10 an die Phase R eines Wechselspannungsnetzes schaltbar. Mit seinem anderen Anschluß liegt der
Motor 10 über einen zur Drehzahlregelung dienenden Elektronikbaustein 11 an dem Mittelpunktsleiter $M_p$ des
Wechselspannungsnetzes. Derartige Elektronikbausteine
sind bekannt, siehe beispielsweise DE-OS 22 38 022, so
daß auf eine nähere Beschreibung dieses Bausteines verzichtet werden kann. Der Elektronikbaustein 11 besitzt
drei Anschlußklemmen 12, 13 und 14. An der Anschlußklemme 12 liegt jeweils mit einem Anschluß der Motor 10 und
ein als veränderbarer Widerstand dargestelltes Stellglied 15. Mit seinem anderen Anschluß ist das Stellglied 15 an die Anschlußklemme 13 geführt, die innerhalb des Elektronikbausteines mit dem Steuerkreis eines
Triac verbunden ist. Der Mittelpunktsleiter $M_p$ ist an
der Anschlußklemme 14 angeschlossen.

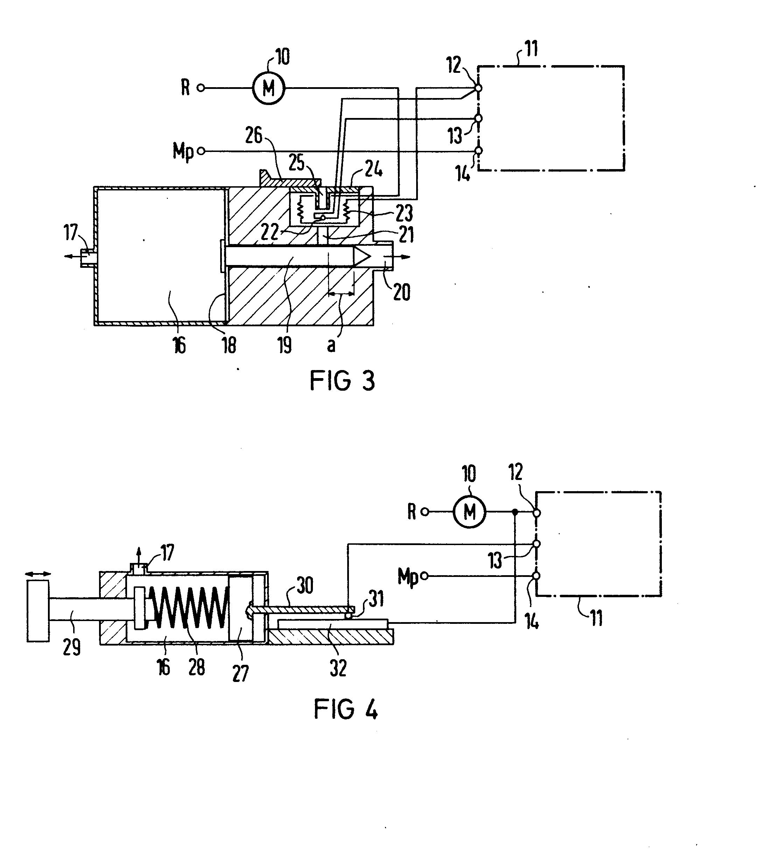

Das in Fig. 3 dargestellte Bauteil weist einen Saugraum 16 auf, der über eine Saugöffnung 17 mit den Saugkreis des Staubsaugers, z.B. mit dem Anschlußstutzen 3
verbindbar ist. In dem Saugraum 16 ist eine Membran 18
angebracht, die mit einem als Bolzen ausgebildeten
Schieber 19 gekoppelt ist. Der Schieber 19 gleitet in
einer Bohrung 20, die ebenfalls mit dem Saugstromkreis
des Staubsaugers verbunden ist. In die Bohrung 20 mündet eine Nebenluftöffnung 21 vor der ein Heißleiter 22
angeordnet ist. Der Heißleiter 22 liegt somit in dem
über die Nebenluftöffnung 21 in den Saugstromkreis eintretenden Nebenluftstrom. In dem Raum über der Nebenluftöffnung 21 ist ein Heizkörper 23 angebracht, der die Umgebung des Heißleiters 22 aufgewärmt. Der Raum über der
Nebenluftöffnung 21 ist durch einen Deckel 24 verschlossen, der einen Einlaß 25 aufweist, durch den der Nebenluftstrom zu der Nebenluftöffnung 21 gelangt. Ferner ist
ein Schieber 26 vorgesehen, durch den die Größe des Einlasses 25 verändert werden kann.

Die Wirkungsweise des dargestellten Bauteiles ist folgende: Durch den im Saugkreis herrschenden Unterdruck
wird die Membran 18 in dem Saugraum 16 nach links gezogen. Mit der Membran 18 wird gleichzeitig der mit ihr
gekoppelte Schieber 19 nach links bewegt. Der Schieber
19 ist so ausgebildet, daß er die Nebenluftöffnung 21
nach rechts um eine Strecke a überragt. Erst wenn durch
die Membran 18 ein dieser Strecke a entsprechender Verschiebeweg zurückgelegt ist, wird die Nebenluftöffnung
21 zum Saugkreis hin freigegeben. Durch die Strecke a
ist somit eine bestimmte Mindestsaugleistung vorgegeben, die erreicht sein muß, bevor die Regelung einsetzt. Ist die Nebenluftöffnung 21 durch den Schieber 19 freigegeben, kann über den Einlaß 25 Nebenluft über den Heißleiter 22 und die Nebenluftöffnung 21 in den Saugkreis einströmen. Die Nebenluftmenge, die über die Nebenluftöffnung 21 in den Saugkreis einströmt, ist dem im Saugkreis herrschenden Unterdruck proportional. Die Kühlung des Heißleiters 22 ist wiederum von der Menge des Nebenluftstromes abhängig, so daß über den Heißleiter 22 eine Regelung der Saugleistung in Abhängigkeit von dem im Saugkreis herrschenden Unterdruck erfolgt. Durch den Schieber 26 kann die Größe des Einlasses 25 verändert werden, wodurch wiederum der Nebenluftstrom beeinflußt wird. Durch eine Verstellung des Schiebers 26 wird somit eine bestimmte maximale Saugleistung vorgegeben. Über den Schieber 26 wird damit in dem Drehzahlregelkreis ein bestimmter Sollwert vorgegeben.

Bei dem in Fig. 4 dargestellten weiteren Bauteil ist in dem über den Saugstutzen 17 an den Saugkreis des Staubsaugers anschließbaren Saugraum 16 ein Saugkolben 27 vorgesehen. Der Saugkolben 27 steht unter der Einwirkung einer Feder 28, deren Spannung durch eine Einstellschraube 29 eingestellt werden kann. Durch das Einstellen einer Vorspannung wird wiederum eine Mindestsaugleistung für den Staubsauger vorgegeben. Der Saugkolben 27 ist über eine Stange 30 mit dem beweglichen Kontakt 31 eines Schiebewiderstandes 32 verbunden. Der Schiebewiderstand 32 dient als Stellglied und ist an die Klemmen 12 und 13 des Elektronikbausteines 11 angeschlossen. Durch den Saugkolben 27 wird der bewegliche Kontakt 31 über den Schiebewiderstand bewegt und somit der in den Steuerkreis eingeschaltete Widerstandswert entsprechend verändert. Damit wird auch der Steuerstrom des Triac verändert, der somit die Leistung des Motors 10 entsprechend einstellt.

Durch die Beeinflussung des Stellgliedes des Drehzahlregelkreises in Abhängigkeit von dem im Saugkreis herrschenden Unterdruck wird bei der jeweils vorgegebenen Schiebekraft bzw. Anpreßkraft der Düse an den Teppich die jeweils maximal mögliche Saugleistung erzielt. Der Unterdruck im Saugkreis des Staubsaugers hängt nicht allein von der jeweiligen Gebläseleistung ab, sondern in starkem Maße auch von der abzusaugenden Fläche. Bei einem locker gewebten, stark luftdurchlässigen Teppich ist auch bei einer hohen Saugleistung des Gebläseaggregates der Unterdruck noch relativ niedrig. Dagegen baut sich bei einem dicht gewebten Teppich schon bei einer relativ niederen Saugleistung ein hoher Unterdruck auf. Durch die vom Unterdruck im Saugkreis abhängige Steuerung der Drehzahl wird erreicht, daß z.B. bei einem dicht gewebten Teppich die Saugleistung relativ niedrig eingeregelt wird, da sich wegen der dichten Beschaffenheit des Teppichs schon bei einer solchen niedrigen Saugleistung ein entsprechend hoher Unterdruck aufbaut und zu einer entsprechend hohen Schiebe- bzw. Anpreßkraft führt. Da bei einem dicht gewebten Teppich der Schmutz nicht sehr tief eindringt, wird auch mit dieser relativ niederen Saugleistung eine ausreichende Reini-gung des Teppichs erreicht. Bei einem locker gewebten Teppich dringt der Schmutz tiefer ein, so daß eine höhere Saugleistung bei der Reinigung erforderlich ist. Da wegen der lockeren Beschaffenheit des Teppichs sich der Unterdruck weniger stark aufbaut, ist zur Erzeugung eines einer bestimmten Schiebe- bzw. Anpreßkraft entsprechenden Unterdruckes eine wesentlich höhere Saugleistung erforderlich, die auch für eine ausreichende Reinigung eines locker gewebten Teppichs benötigt wird. Dies zeigt, daß bei der beschriebenen Art der Regelung die Saugleistung des Staubsaugers den jeweiligen Erfordernissen entspricht.

Patentansprüche

1. Staubsauger mit einer Drehzahlregeleinrichtung für das Gebläseaggregat, bei dem im Regelkreis der Regeleinrichtung ein Stellglied vorgesehen ist, das in Abhängigkeit von dem im Saugkreis herrschenden Unterdruck verstellbar ist, d a d u r c h   g e k e n n z e i c h n e t , daß eine mit dem Saugkreis verbundene Nebenluftöffnung (21) vorgesehen und in dem über diese Öffnung (21) in den Saugkreis eintretenden Nebenluftstrom ein das Stellglied bildender Heißleiter (22) angeordnet ist.

2. Staubsauger mit einer Drehzahlregeleinrichtung für das Gebläseaggregat, bei dem im Regelkreis der Regeleinrichtung ein Stellglied vorgesehen ist, das in Abhängigkeit von dem im Saugkreis herrschenden Unterdruck verstellbar ist, d a d u r c h   g e k e n n z e i c h n e t , daß im Bereich des zur Kraftübertragung zwischen Handgriff (6) und Düse (8) dienenden Saugrohres (7) des Saugkreises als Stellglied ein eine mechanische Kraft in eine proportionale elektrische Größe umwandelndes Element angeordnet und mit der Regeleinrichtung (11) verbunden ist.

3. Staubsauger nach Anspruch 1, d a d u r c h   g e k e n n z e i c h n e t , daß der den Heißleiter (22) umgebende Raum durch einen Heizkörper (23) erwärmbar ist.

4. Staubsauger nach Anspruch 3, d a d u r c h   g e k e n n z e i c h n e t , daß der durch die Nebenluftöffnung (21) eintretende Nebenluftstrom durch ein in Abhängigkeit von dem im Saugkreis herrschenden Unterdruck betätigbares Verschlußelement (19) steuerbar ist.

5. Staubsauger nach Anspruch 4, d a d u r c h
g e k e n n z e i c h n e t , daß vor der Nebenluftöffnung ein mit einer Membran (18) oder einem Kolben,
welche dem Unterdruck ausgesetzt sind, gekoppelter
Schieber (19) angeordnet ist, der die Nebenluftöffnung
(21) erst nach einem bestimmten Verschiebeweg (a)
freigibt.

6. Staubsauger nach Anspruch 3, 4 oder 5, d a d u r c h
g e k e n n z e i c h n e t , daß die Größe des Einlasses (25) der Nebenluftöffnung (21) veränderbar ist.

7. Staubsauger nach Anspruch 2, d a d u r c h  g e -
k e n n z e i c h n e t , daß das Saugrohr (7) aus
mindestens zwei gegen einen Kraftspeicher ineinanderschiebbaren Teilrohren besteht und mit diesen Teilrohren
ein das Stellglied bildendes Schiebepotentiometer gekoppelt ist.

8. Staubsauger nach Anspruch 2, d a d u r c h  g e -
k e n n z e i c h n e t , daß an dem Saugrohr (7)
ein durch den auf das Saugrohr (7) ausgeübten Druck
beeinflußter, das Stellglied bildender Dehnmeßstreifen
oder Piezoquarz angeordnet ist.

FIG 1

FIG 2

FIG 3

FIG 4